# FASCICULE DE BREVET EUROPEEN

(11) **EP 0 722 427 B1**
(45) Date de publication et mention de la délivrance du brevet: **20.08.2003**
(21) Numéro de dépôt: 95924352.8
(22) Date de dépôt: 22.06.1995
(51) Int. Cl.: C03C 3/087, C03C 4/02, C03C 3/095

(54) **COMPOSITION DE VERRE DESTINEE A LA FABRICATION DE VITRAGE**
GLASZUSAMMENSETZUNG ZUR HERSTELLUNG VON VERGLASUNGEN
GLASS COMPOSITION FOR MAKING GLAZING

(30) Priorité: 23.06.1994 FR 9407724
(43) Date de publication de la demande: 24.07.1996
(73) Titulaire: SAINT-GOBAIN GLASS FRANCE, 92400 Courbevoie (FR)
(72) Inventeur: COMBES, Jean-Marie, F-75018 Paris (FR); MAZON-RAMOS, Pédro, Pablo, E-33005 Oviedo (ES)
(74) Mandataire: Breton, Jean-Claude
(86) Numéro de dépôt international: FR9500828
(87) Numéro de publication internationale: WO96000194

(56) Documents cités:
- EP-A- 0 452 207
- EP-A- 0 469 446
- EP-A- 0 536 049
- EP-A- 0 561 337
- FR-A- 2 672 587
- FR-A- 2 699 526
- US-A- 3 294 556

## Description

La présente invention concerne une composition de verre silico-sodo-calcique apte à la réalisation de vitrages susceptibles notamment d'être utilisés dans le domaine de l'industrie automobile ou dans le domaine architectural.

Les vitrages utilisés dans ces domaines peuvent présenter des caractéristiques de transmission fort différentes en fonction des effets recherchés.

Un des effets activement recherché est la plus grande réduction possible de la transmission énergétique du vitrage, que sa transmission dans le visible soit faible ou élevée. Cet effet est obtenu en augmentant l'absorption des radiations infrarouges du verre dont il est constitué.

La recherche de cet effet va souvent de pair avec la recherche d'autres effets comme une faible transmission des radiations ultraviolettes et une coloration particulière.

Si les constituants susceptibles d'obtenir tel ou tel effet sont généralement connus, la recherche d'une combinaison de caractéristiques particulières, par exemple des facteurs de transmission lumineuse et de transmission énergétique présentant un rapport déterminé, associés à un domaine de longueurs d'onde bien définir et à une pureté précise, est difficile.

Ainsi, pour maintenir une transmission lumineuse élevée dans la partie visible du spectre tout en absorbant le plus possible le reste de l'énergie solaire, il est connu d'introduire du fer dans la composition du verre. Le fer est présent dans le verre à la fois sous la forme d'oxyde ferrique (Fe₂O₃) et d'oxyde ferreux (FeO).

La présence de Fe₂O₃ permet d'absorber les radiations U.V. et celles qui possèdent de courtes longueurs d'ondes dans la partie visible du spectre ; à l'opposé, la présence de FeO permet d'absorber les radiations du proche I.R. et celles correspondant aux grandes longueurs d'ondes du domaine visible.

Si l'augmentation de la teneur en fer, sous ses deux formes oxydées, accentue l'absorption des radiations aux deux extrémités du spectre visible, cet effet est obtenu au détriment de la transmission lumineuse.

A ce jour, différentes solutions ont été proposées pour utiliser au mieux l'aptitude des oxydes de fer à absorber les radiations en conservant néanmoins la plus grande transmission lumineuse possible. Les solutions privilégiant l'absorption des radiations appartenant au domaine du proche infrarouge peuvent consister à modifier de manière importante la composition du verre ou bien à fabriquer des verres très réduits dont la composition est relativement classique.

La première catégorie de solutions peut être illustrée par la demande de brevet JP-60-215546, la seconde catégorie par le brevet EP-B-297 404.

D'après La demande japonaise les verres qui présentent les caractéristiques de transmission et d'absorption recherchées contiennent au moins 4% en poids de BaO. Cet oxyde, introduit en quantité suffisante, a pour effet de déplacer la bande d'absorption due à FeO dans le proche infrarouge vers les grandes longueurs d'onde. Cet effet peut être accentué par l'introduction de K₂O dans ces verres.

L'introduction de BaO selon des teneurs relativement élevées dans ces verres a cependant des effets qui sont négatifs : l'augmentation non négligeable du coût de la composition, la diminution de la résistance hydrolytique du verre. Un fort pourcentage de BaO peut accentuer le phénomène de dévitrification et rendre plus difficile l'obtention d'un verre homogène.

Les verres décrits dans le brevet européen cité plus haut sont des verres silico-sodo-calciques traditionnels dont la teneur en fer total, exprimée sous la forme de Fe₂O₃, est comprise entre 0,45 et 0,65%. Ces verres sont élaborés dans des conditions telles qu'au moins 35% et de préférence au moins 50% de fer total est sous la forme FeO. L'augmentation de la teneur en FeO ainsi obtenue permet d'accentuer l'absorption des verres dans l'infra-rouge et de diminuer le facteur T_{E}. Toutefois, lorsqu'un verre est élaboré en présence de soufre dans des conditions réductrices, ce dernier prend une couleur ambre due à la formation de chromophores qui résultent de la réaction entre le soufre et le fer ferrique. Pour éviter cela il est donc nécessaire de supprimer les sulfates dans le mélange vitrifiable et, comme la teneur en soufre dans un verre n'est jamais nulle, de veiller à ce que le pourcentage de fer ferrique reste faible, ce qui conduit à limiter rigoureusement la teneur en fer total.

La présente invention a pour objet une composition de verre, susceptible d'être nappée à la surface d'un bain de métal selon la technique du verre flotté, dont le coût est proche du coût d'un verre flotté standard et qui présente, pour un facteur de transmission lumineuse globale sous illuminant A (TL_{A}) donné, un facteur de transmission énergétique globale (T_{E}) inférieur à celui de verres connus présentant un facteur TL_{A} identique.

La présente invention a pour objet une composition de verre susceptible de permettre l'obtention de vitrage présentant une coloration relativement neutre, ou variant du bleu au vert en passant par toutes les nuances intermédiaires.

La présente invention a pour objet une composition de verre susceptible d'être élaborée dans les conditions d'oxydo-réduction habituellement observées pour un verre flotté standard.

Ces buts sont atteints grâce à une composition de verre sifico-sodo-calcique qui comprend les constituants ci-après selon des teneurs exprimées en pourcentages pondéraux, définies par les limites suivantes :

| | |
|---|---|
| SiO₂ | 69 à 75 % |
| Al₂O₃ | 0 à 3 % |
| B₂O₃ | 0 à 5 % |
| CaO | 2 à 10 % |
| MgO | 0 à 2 % |
| Na₂O | 9 à 17 % |
| K₂O | 0 à 8 % |
| Fe₂O₃ (fer total) | 0,2 à 4 % |
| Se, CoO, Cr₂O₃, NiO, CuO | 0 à 0,45 % |

La teneur en agent colorants autres que le fer étant au moins égale à 0,0002 % lorsque la teneur en Fe₂O₃ est égale ou inférieure à 1,5 %, cette composition étant susceptible de contenir également du fluor, des oxydes de zinc, de zirconium, de cérium, de titane et moins de 4% d'oxyde de baryum, la somme des pourcentages des oxydes alcalino-terreux demeurant égale ou inférieure à 10%.

Dans les verres selon l'invention la somme des teneurs des agents colorants, Se, CoO, Cr₂O₃, NiO, exprimées en pourcentages pondéraux, varie de 0 à 0,15%.

Les verres selon l'invention peuvent également contenir des impuretés provenant soit des matières premières vitrifiables choisies, soit du calcin recyclé dans le four de fusion. Ces impuretés peuvent être constituées en très faibles quantités par des agents colorants tels que les composés de manganèse ou de vanadium.

La teneur et la nature de chacun des constituants entrant dans la composition des verres selon l'invention, commentées ci-après, permettent d'obtenir des verres qui, tout en présentant les propriétés requises pour fabriquer des vitrages à partir de feuilles découpées dans un ruban de verre flotté, se caractérisent par un déplacement du maximum de la bande d'absorption due à FeO vers les grandes longueurs d'onde.

Les verres selon l'invention se caractérisent également par une longueur d'onde dominante sous illuminant C égale ou inférieure à environ 560 nanomètres.

Dans les verres selon l'invention, la silice est maintenue dans des limites relativement étroites pour les raisons suivantes, au-dessus d'environ 75% la viscosité du verre et son aptitude à la dévitrification augmentent fortement ce qui rend beaucoup plus difficile sa fusion et sa coulée sur un bain d'étain, au-dessous de 69% la résistance hydrolytique du verre décroît très rapidement et la transmission dans le visible diminue également.

Cette diminution de la résistance hydrolytique du verre peut être compensée, au moins en partie, par l'introduction de Al₂O₃, mais cet oxyde contribue à l'augmentation de sa viscosité et à une diminution de la transmission dans le visible ; il ne peut donc être utilisé qu'en quantité très limitée.

Les oxydes alcalins Na₂O et K₂O permettent de faciliter la fusion du verre et d'ajuster sa viscosité aux températures élevées afin de la maintenir proche de celle d'un verre standard. K₂O peut être utilisé jusqu'à environ 8%. Au-delà de ce pourcentage, l'augmentation du coût de la composition devient un handicap économique. Par ailleurs, l'augmentation du pourcentage de K₂O ne peut se faire, pour l'essentiel, qu'au détriment de Na₂O ce qui peut contribuer à l'augmentation de la viscosité. Toutefois, dans des conditions déterminées, la présence de K₂O permet d'augmenter l'absorption du verre dans l'infrarouge. La somme des teneurs en Na₂O et K₂O, exprimées en pourcentages pondéraux, est, de préférence, égale ou supérieure à 15%.

Les oxydes alcalino-terreux jouent un rôle déterminant dans l'obtention des propriétés des verres de la présente invention.

Il a été en effet découvert que la limitation de la teneur en MgO à un pourcentage pondéral de 2% et, de préférence inférieur à 1%, voire même sa suppression dans les verres de l'invention, a notamment pour effet de déplacer la bande d'absorption due à FeO vers les grandes longueurs d'onde et permet ainsi d'augmenter leur capacité d'absorption dans l'infrarouge sans nuire à la transmission dans le visible. La suppression de MgO, qui joue un rôle important sur la viscosité peut être compensée au moins en partie par l'augmentation de Na₂O. Ainsi, lorsque la teneur en MgO est pratiquement nulle, la somme des teneurs en Na₂O et K₂O, exprimées en pourcentages pondéraux est égale ou supérieure à 15%.

CaO doit être limité à 10% ; au-delà, l'aptitude du verre à la dévitrification augmente trop rapidement.

BaO, qui permet d'augmenter la transmission lumineuse de certains verres, peut être ajouté dans les compositions selon l'invention dans des teneurs inférieures à 4%. En effet, BaO a une influence beaucoup plus faible que MgO et CaO sur la viscosité du verre. Dans le cadre de l'invention l'augmentation de BaO se fait essentiellement au détriment des oxydes alcalins, de MgO et surtout de CaO. Toute augmentation importante de BaO contribue donc à augmenter la viscosité du verre, notamment aux basses températures. De surcroît l'introduction d'un pourcentage élevé de BaO majore sensiblement le coût de la composition et a tendance à réduire la résistance hydrolytique du verre. A ces considérations il faut ajouter que, contrairement à ce qu'indique le document japonais analysé précédemment, l'introduction d'un faible pourcentage de BaO dans un verre contenant peu et, de préférence, pas de MgO, permet d'augmenter encore l'absorption des radiations infrarouges. Lorsque les verres de l'invention contiennent de l'oxyde de baryum, le pourcentage de cet oxyde est, de préférence, compris entre 0,5 et 3,5% en poids.

Outre le respect des limites définies précédemment pour la variation de la teneur de chaque oxyde alcalino-terreux, il est impératif, pour obtenir les propriétés de transmission recherchées, de limiter la somme des pourcentages de MgO, CaO et BaO à une valeur égale ou inférieure à 10%.

Les verres selon l'invention contiennent également des oxydes de fer dont les teneurs sont globalement exprimées sous la forme Fe₂O₃ (fer total). La teneur en fer total de même que la teneur en FeO des verres selon l'invention peuvent varier dans de larges proportions en fonction des propriétés recherchées pour lesdits verres.

Les verres selon l'invention peuvent contenir également du fluor, de préférence entre 0,5 et 2% en poids. Outre son action bien connue sur la fusion et la viscosité du verre, ce constituant a un effet spécifique sur l'absorption des radiations infrarouges, effet qui s'additionne à l'effet produit par la suppression de MgO et l'introduction de K₂O et BaO. Cet effet se traduit par un léger déplacement du maximum de la bande d'absorption dans l'infrarouge, mais surtout par un redressement de pente de ladite bande à l'extrémité du domaine du visible proche de l'infrarouge.

Les verres selon l'invention peuvent aussi contenir de l'oxyde de zinc. Cet oxyde permet de diminuer la viscosité du verre si nécessaire et contribue à augmenter la résistance hydrolytique du verre et à diminuer son aptitude à la dévitrification. C'est la raison pour laquelle ZnO est introduit de préférence dans les verres selon l'invention contenant un pourcentage élevé de silice et/ou ne contenant pas d'alumine. L'oxyde de zinc peut être aussi avantageusement ajouté dans le mélange vitrifiable qui sera utilisé pour élaborer un verre réduit. Cet oxyde permet d'éviter l'apparition d'une couleur ambre, due à la formation de sulfures de fer, qui peut se produire dans ce type de verres. Ainsi l'oxyde de zinc peut être introduit dans les verres selon l'invention à raison d'au moins 0,05% lorsque le rapport FeO/Fe₂O₃ (total) est égal ou supérieur à environ 0,4%.Afin de ne pas majorer excessivement le coût de la composition, la teneur en ZnO n'excède pas environ 3% en poids.

Les verres selon l'invention peuvent également contenir de l'oxyde de zirconium. Cet oxyde permet de stabiliser le verre et d'améliorer la résistance chimique du verre, en particulier sa résistance hydrolytique. Cet oxyde est introduit, de préférence, dans les verres selon l'invention contenant peu ou pas d'alumine dans des teneurs qui peuvent atteindre 1,5% en poids.

Les verres selon l'invention peuvent également contenir de l'oxyde de cérium afin d'augmenter l'absorption des radiations ultra-violettes. Les verres selon l'invention peuvent comprendre jusqu'à 1,5% et, de préférence, de 0,3 à 0,8% en poids de Ce₂O₃.

Les verres selon l'invention peuvent aussi contenir de l'oxyde de titane, la teneur de cet oxyde pouvant atteindre 1% en poids. Cet oxyde, comme Ce₂O₃, permet d'augmenter l'absorption des radiations ultraviolettes. Lorsque ces deux oxydes sont présents dans les verres selon l'invention, l'introduction de TiO₂ permet de réduire la teneur en Ce₂O₃ qui est un oxyde cher. Généralement, la somme de ces deux oxydes n'excède pas 1,2% en poids.

Les verres selon l'invention peuvent également contenir jusqu'à 1% d'autres constituants apportés par les impuretés des matières premières vitrifiables et/ou du fait de l'introduction de calcin dans le mélange vitrifiable et/ou provenant de l'utilisation d'agents d'affinage (SO₃, Cl, Sb₂O₃, As₂O₃).

Les verres selon l'invention peuvent être élaborés dans des conditions qui permettent d'atteindre le degré d'oxydo-réduction désiré. Ainsi les verres selon l'invention peuvent être élaborés en utilisant les agents d'affinage connus, tels que les sulfates, leur rédox étant inférieur à 0,40 et généralement compris entre 0,2 et 0,35. Les verres selon l'invention les moins riches en fer peuvent être aussi élaborés dans des conditions décrites, par exemple, par le brevet EP-B-297 404 et présenter un rédox supérieur à 0,4 ou 0,5 ; le rédox des verres selon l'invention reste toutefois inférieur à 0,8.

La teneur et la nature de chacun des constituants entrant dans la composition des verres selon l'invention, principalement les oxydes alcalino-terreux, permettant d'obtenir des verres absorbant davantage dans le proche infrarouge. Cette propriété est due à un déplacement vers les grandes longueurs d'onde du maximum de la bande d'absorption de FeO dans ce domaine spectral. Ce déplacement s'accompagne souvent d'une augmentation de l'intensité de cette bande d'absorption et/ou de son élargissement. Cette augmentation de l'absorption dans l'infrarouge n'entraîne pas pour autant une diminution, même faible, de la transmission dans le visible, elle s'accompagne au contraire d'une augmentation de ladite transmission.

Les agents colorants autres que le fer sont introduits dans la composition des verres d'après l'invention, seuls ou en combinaison, selon des teneurs pondérales qui, de préférence, restent inférieures aux limites suivantes:
Se < 0,008 %
CoO < 0,04 %
Cr₂O₃ < 0,1 %
NiO < 0,07 %
CuO < 0,3 %

Les avantages des verres selon l'invention seront mieux perçus à travers les verres décrits dans le tableau en annexe et qui sont commentés ci-après.

Ces verres, hors agents colorants, ont des compositions très proches de la composition moyenne A, indiquée ci-après, exprimée en pourcentages pondéraux. Un verre connu référencé 1, donné à titre comparatif, présente, hors agents colorants, la composition B décrite ci-après, exprimée en pourcentages pondéraux :

| | **A** | **B** |
|---|---|---|
| SiO₂ | 72,60 | 70,86 % |
| Al₂O₃ | 0,50 | 0,65 % |
| CaO | 8,70 | 9,5 % |
| MgO | 0,03 | 4,25 % |
| Na₂O | 16,30 | 13,9 % |
| K₂O | 0,20 | 0,2 % |
| SO₃ | 0,15 | 0,27 % |

Ces verres ont été élaborés dans des conditions d'oxydo-réduction variées. Les verres référencés 13 à 17 sont des compositions théoriques.

Les facteurs de transmission lumineuse globale sous illuminant A (TL_{A}) et de transmission énergétique globale (T_{E}), de même que la transmission dans l'infrarouge (T_{IR}), ont été mesurés selon la méthode PARRY MOON MASS 2 ; la transmission dans l'ultraviolet a été déterminée selon la méthode définie par la norme ISO 9050. Les valeurs de ces différents facteurs de transmission ainsi que celles de la pureté d'excitation sous illuminant C (P_{C}) correspondent à une épaisseur de 3,85 millimètres, sauf les exemples 3, 4 pour lesquels les valeurs indiquées correspondent à une épaisseur de 3,15 millimètres.

Ces différents exemples montrent que dans une large gamme d'agents colorants les verres selon l'invention présentent un facteur de transmission énergétique globale (T_{E}) inférieur au facteur de transmission lumineuse globale (TL_{A}) que la valeur de ce dernier soit élevée ou faible. Cette bonne sélectivité des verres selon l'invention est due en grande partie au déplacement du maximum de la bande d'absorption, caractéristique de FeO vers les grandes longueurs d'onde. Les exemples illustrant l'invention montrent que ce maximum (λ_{FeO}) est généralement supérieur à 1090 nanomètres et très souvent égal ou supérieur à 1150 nanomètres, alors que les verres magnésiens de l'art antérieur présentent un maximum de cette bande très nettement inférieur à ces valeurs.

Les verres selon l'invention sont compatibles avec les techniques habituelles de fabrication du verre plat sous réserve, pour certains verres, d'être élaborés dans des fours équipés d'électrodes. L'épaisseur du ruban de verre obtenu par nappage du verre en fusion sur un bain d'étain peut varier entre 0,8 et 10 millimètres.

Le vitrage obtenu par la découpe du ruban de verre peut subir ultérieurement une opération de bombage, notamment lorsqu'il doit être monté sur un véhicule automobile.

Pour réaliser des pare-brise ou des vitrages latéraux, le vitrage choisi est initialement découpé dans un ruban de verre dont l'épaisseur varie généralement entre 3 et 5 millimètres. Sous ces épaisseurs les verres selon l'invention assurent un bon confort thermique.

A l'instar d'autres vitrages, les vitrages obtenus à partir des verres selon l'invention peuvent être soumis au préalable à des traitements superficiels ou être associés, par exemple, à un revêtement organique tel qu'un film à base de polyuréthanes à propriétés antilacérantes ou à un film assurant l'étanchéité en cas de bris ; il peut être revêtu localement d'une couche telle qu'une couche d'émail.

Les vitrages selon l'invention peuvent être revêtus d'au moins une couche d'oxyde métallique obtenue par dépôt chimique à haute température selon les techniques de pyrolyse ou de dépôt chimique en phase vapeur (CVD) ou par dépôt sous vide.

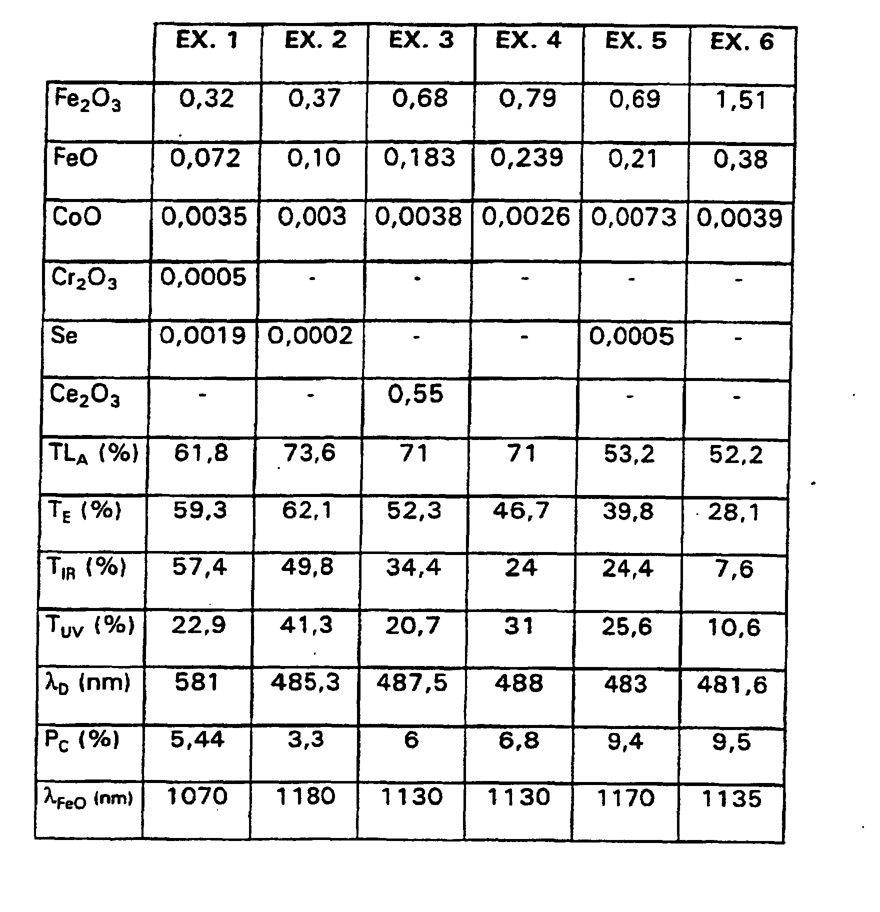

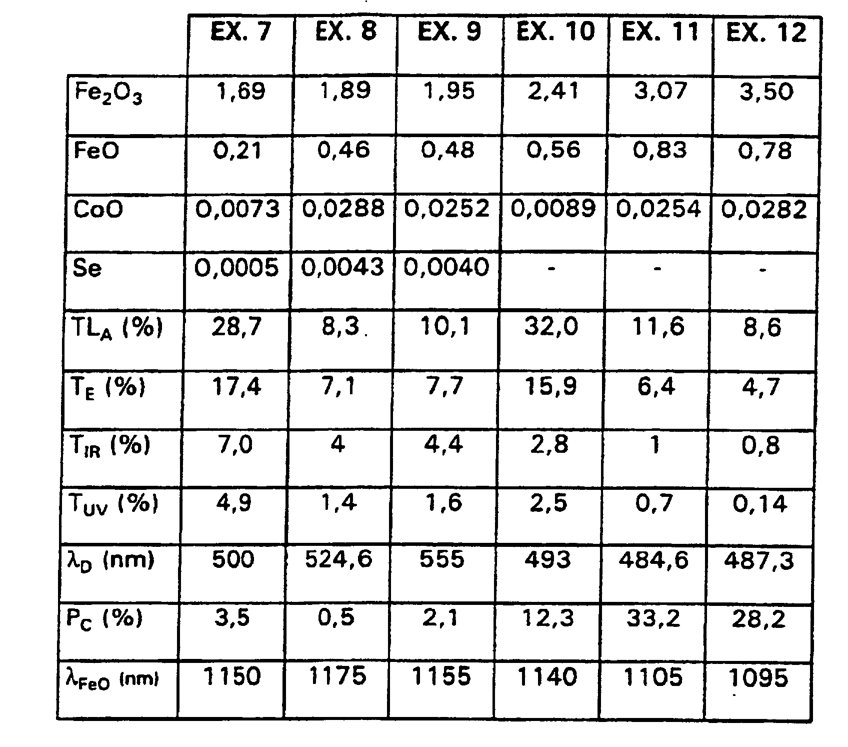

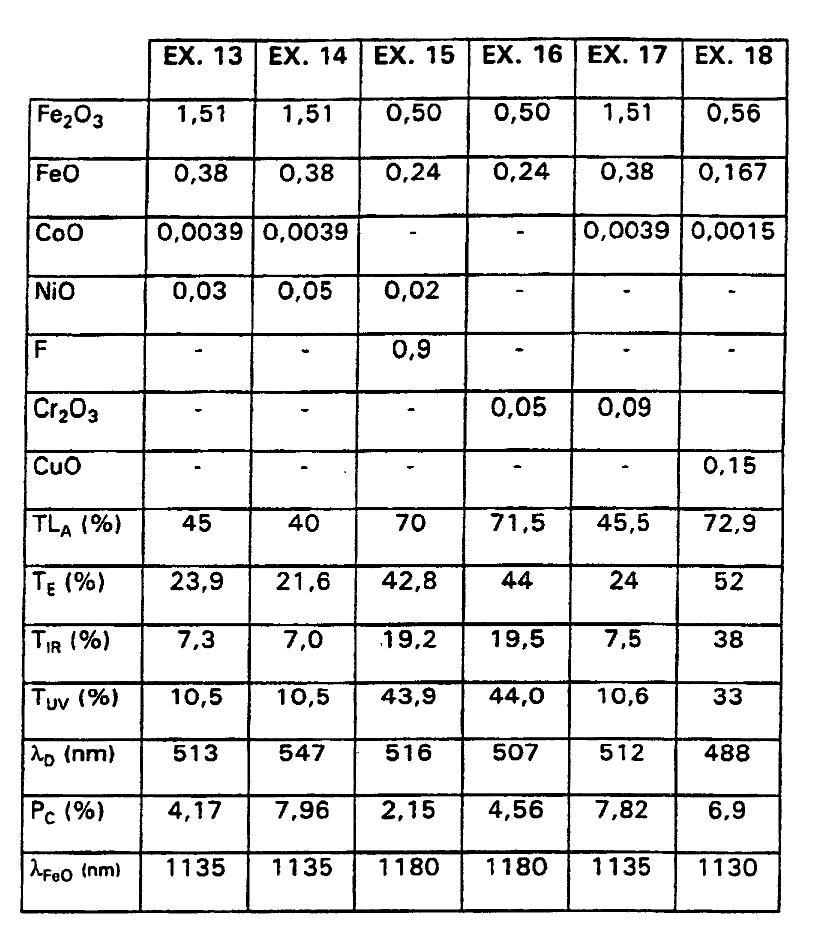

## Revendications (Revendications pour l'(les) Etat(s) contractant(s) suivant(s): BE, ES, LU, PT, SE)

1. Composition de verre silico-sodo-calcique susceptible d'être nappée à la surface d'un bain de métal selon la technique du verre flotté, notamment pour former un vitrage, **caractérisée en ce qu'**elle comprend les constituants ci-après selon des teneurs, exprimées en pourcentages pondéraux, définies par les limites suivantes :
| | |
|---|---|
| SiO₂ Al₂O₃ | 69 à 75 % 0 à 3 % |
| B₂O₃ | 0 à 5 % |
| CaO | 2 à 10 % |
| MgO | 0 à 2 % |
| Na₂O | 9 à 17 % |
| K₂O | 0 à 8 % |
et les agents colorants ci-après constitués par :
| | |
|---|---|
| Fe₂O₃ (fer total) | 0,2 à 4 % |
| Se, CoO, Cr₂O₃, NiO, CuO | 0 à 0,45 % |
la somme des teneurs de Se, CoO, Cr₂O₃, NiO et CuO étant au moins égale à 0,0002 % lorsque la teneur en Fe₂O₃ est égale ou inférieure à 1,5 %, la somme des teneurs de Se, CoO, Cr₂O₃, NiO variant de 0 à 0,15 %,
cette composition comprenant éventuellement du fluor, des oxydes de zinc, de zirconium, de cérium, de titane et moins de 4 % d'oxyde de baryum, la somme des pourcentages des oxydes alcalino-terreux demeurant égale ou inférieure à 10 %.

2. Composition de verre selon la revendication 1, **caractérisée en ce que** la teneur en MgO est inférieure à 1 % et, de préférence, est pratiquement nulle.

3. Composition de verre selon l'une des revendications 1 et 2, **caractérisée en ce que** la somme des teneurs en oxydes alcalins est supérieure à environ 15 %.

4. Composition de verre selon l'une quelconque des revendications précédentes, **caractérisée en ce qu'**elle comprend de 0,5 à 3,5 % en poids de BaO.

5. Composition de verre selon l'une quelconque des revendications précédentes, **caractérisée en ce qu'**elle comprend de 0,5 à 2 % en poids de fluor.

6. Composition de verre selon l'une quelconque des revendications précédentes, **caractérisée en ce qu'**elle comprend jusqu'à 1,5 en poids de ZrO₂.

7. Composition de verre selon l'une quelconque des revendications précédentes, **caractérisée en ce qu'**elle comprend jusqu'à 1,5 %, et de préférence, de 0,3 à 0,8 % en poids de Ce₂O₃.

8. Composition de verre selon l'une quelconque des revendications précédentes, **caractérisée en ce qu'**elle comprend jusqu'à 1 % en poids de TiO₂₋

9. Composition de verre selon l'une des revendications 7 et 8, **caractérisée en ce qu'**elle comprend simultanément des oxydes de cérium et de titane dans des proportions telles que la somme Ce₂O₃ + TiO₂ demeure égale ou inférieure à 1,2 %.

10. Composition de verre selon quelconque des revendications précédentes, **caractérisée en ce qu'**elle comprend des oxydes de fer dans des proportions telles que le rapport FeO/Fe₂O₃ demeure inférieur à 0,8.

11. Composition de verre selon quelconque des revendications précédentes, **caractérisée en ce qu'**elle comprend un ou plusieurs agents colorants autres que le fer selon des teneurs pondérales définies par les limites suivantes :
Se < 0,008 %
CoO < 0,04 %
Cr₂O₃ < 0,1 %
NiO < 0,07 %
CuO < 0,3 %

12. Composition de verre selon la revendication 1, **caractérisée en ce qu'**elle présente une longueur d'onde dominante sous illuminant C inférieure à 560 nm.

13. Vitrage, **caractérisé en ce qu'**il comprend au moins une feuille de verre dont la composition chimique est définie par l'une quelconque des revendications 1 à 11, ladite feuille présentant une épaisseur comprise entre 0,8 et 10 mm.

## Revendications (Revendications pour l'(les) Etat(s) contractant(s) suivant(s): DE, FR, GB, IT)

1. Composition de verre silico-sodo-calcique susceptible d'être nappée à la surface d'un bain de métal selon la technique du verre flotté, notamment pour former un vitrage, **caractérisée en ce qu'**elle comprend les constituants ci-après selon des teneurs, exprimées en pourcentages pondéraux, définies par les limites suivantes :
| | |
|---|---|
| SiO₂ | 69 à 75 % |
| Al₂O₃ | 0 à 3 % |
| B₂O₃ | 0 à 5 % |
| CaO | 2 à 10 % |
| MgO | 0 à 2 % |
| Na₂O | 9 à 17 % |
| K₂O | 0 à 8 % |
et que les agents colorants sont constitués par :
| | |
|---|---|
| Fe₂O₃ (fer total) | 0,2 à 4 % |
| Se, CoO, Cr₂O₃, NiO, CuO | 0 à 0,45 % |
la somme des teneurs de Se, CoO, Cr₂O₃, NiO et CuO étant au moins égale à 0,0002 % lorsque la teneur en Fe₂O₃ est égale ou inférieure à 1,5 %, la somme des teneurs de Se, CoO, Cr₂O₃, NiO variant de 0 à 0,15 %,
cette composition comprenant éventuellement du fluor, des oxydes de zinc, de zirconium, de cérium, de titane et moins de 4 % d'oxyde de baryum, la somme des pourcentages des oxydes alcalino-terreux demeurant égale ou inférieure à 10 % et la somme des teneurs des oxydes alcalins étant égale ou supérieure à environ 15 %

2. Composition de verre selon la revendication 1, **caractérisée en ce que** la teneur en MgO est inférieure à 1 % et, de préférence, est pratiquement nulle.

3. Composition de verre selon l'une quelconque des revendications précédentes, **caractérisée en ce qu'**elle comprend de 0,5 à 3,5 % en poids de BaO.

4. Composition de verre selon l'une quelconque des revendications précédentes, **caractérisée en ce qu'**elle comprend de 0,5 à 2 % en poids de fluor.

5. Composition de verre selon l'une quelconque des revendications précédentes, **caractérisée en ce qu'**elle comprend de 0,05 à 3 % en poids de ZnO.

6. Composition de verre selon l'une quelconque des revendications précédentes, **caractérisée en ce qu'**elle comprend de 0,05 à 3 % en poids de ZnO.

7. Composition de verre selon l'une quelconque des revendications précédentes, **caractérisée en ce qu'**elle comprend jusqu'à 1,5 à 3 % en poids de ZrO₂.

8. Composition de verre selon l'une quelconque des revendications précédentes, **caractérisée en ce qu'**elle comprend jusqu'à 1,5 %, et de préférence, de 0,3 à 0,8 % en poids de Ce₂O₃.

9. Composition de verre selon l'une quelconque des revendications précédentes, **caractérisée en ce qu'**elle comprend jusqu'à 1 % en poids de TiO₂.

10. Composition de verre selon l'une des revendications 8 et 9, **caractérisée en ce qu'**elle comprend simultanément des oxydes de cérium et de titane dans des proportions telles que la somme Ce₂O₃ + TiO₂ demeure égale ou inférieure à 1,2 %.

11. Composition de verre selon quelconque des revendications précédentes, **caractérisée en ce qu'**elle comprend des oxydes de fer dans des proportions telles que le rapport FeO/Fe₂O₃ demeure inférieur à 0,8.

12. Composition de verre selon quelconque des revendications précédentes, **caractérisée en ce qu'**elle comprend un ou plusieurs agents colorants autres que le fer selon des teneurs pondérales définies par les limites suivantes :
Se < 0,008 %
CoO < 0,04 %
Cr₂O₃ < 0,1 %
NiO < 0,07 %
CuO < 0,3 %

13. Composition de verre selon la revendication 1, **caractérisée en ce qu'**elle présente une longueur d'onde dominante sous illuminant C inférieure à 560 nm.

14. Vitrage, **caractérisé en ce qu'**il comprend au moins une feuille de verre dont la composition chimique est définie par l'une quelconque des revendications 1 à 12, ladite feuille présentant une épaisseur comprise entre 0,8 et 10 mm.

## Claims (Claims for the following Contracting State(s): BE, ES, LU, PT, SE)

1. Soda-lime-silica glass composition able to be layered on the surface of a bath of metal in accordance with the float glass technique, in particular for forming a glazing pane, **characterised in that** it comprises the following constituents according to the contents, expressed in percentages by weight, defined by the following limits:
| | |
|---|---|
| SiO₂ | 69 to 75 % |
| Al₂O₃ | 0 to 3 % |
| B₂O₃ | 0 to 5 % |
| CaO | 2 to 10 % |
| MgO | 0 to 2 % |
| Na₂O | 9 to 17 % |
| K₂O | 0 to 8 % |
and the following colouring agents consisting of:
| | |
|---|---|
| Fe₂O₃ (total iron) | 0.2 to 4% |
| Se, CoO, Cr₂O₃, NiO, CuO | 0 to 0.45% |
the sum of the Se, CoO, Cr₂O₃, NiO and CuO contents being at least equal to 0.0002% when the Fe₂O₃ content is equal to or less than 1.5%, the sum of the Se, CoO, Cr₂O₃ and NiO contents varying from 0 to 0.15%,
this composition possibly comprising fluorine, oxides of zinc, zirconium, cerium and titanium and less than 4% barium oxide, the sum of the percentages of alkaline-earth oxides remaining equal to or less than 10%.

2. Glass composition according to Claim 1, **characterised in that** the MgO content is less than 1% and is preferably practically zero.

3. Glass composition according to one of Claims 1 and 2, **characterised in that** the sum of the alkaline oxide contents is greater than approximately 15%.

4. Glass composition according to any one of the preceding claims, **characterised in that** it comprises 0.5 to 3.5% BaO by weight.

5. Glass composition according to any one of the preceding claims, **characterised in that** it comprises 0.5 to 2% fluorine by weight.

6. Glass composition according to any one of the preceding claims, **characterised in that** it comprises 0.05 to 3% ZnO by weight.

7. Glass composition according to any one of the preceding claims, **characterised in that** it comprises up to 1.5 to 3% ZrO₂ by weight.

8. Glass composition according to any one of the preceding claims, **characterised in that** it comprises up to 1.5% and preferably 0.3 to 0.8% Ce₂O₃ by weight.

9. Glass composition according to any one of the preceding claims, **characterised in that** it comprises up to 1% TiO₂ by weight.

10. Glass composition according to one of Claims 8 and 9, **characterised in that** it comprises simultaneously cerium and titanium oxides in proportions such that the sum Ce₂O₃ + TiO₂ remains equal to or less than 1.2%.

11. Glass composition according to any one of the preceding claims, **characterised in that** it comprises iron oxides in proportions such that the ratio FeO/Fe₂O₃ remains less than 0.8.

12. Glass composition according to any one of the preceding claims, **characterised in that** it comprises one or more colouring agents other than iron in proportions by weight defined by the following limits:
Se < 0.008%
CoO < 0.04%
Cr₂O₃ < 0.1%
NiO < 0.07%
CuO < 0.3%

13. Glass composition according to Claim 1, **characterised in that** it has a dominant wavelength under illuminant C of less than 560 nm.

14. Glazing pane, **characterised in that** it comprises at least one sheet of glass whose chemical composition is defined by any one of Claims 1 to 12, the said sheet having a thickness of between 0.8 and 10 mm.

## Claims (Claims for the following Contracting State(s): DE, FR, GB, IT)

1. Soda-lime-silica glass composition able to be layered on the surface of a bath of metal in accordance with the float glass technique, in particular for forming a glazing pane, **characterised in that** it comprises the following constituents according to the contents, expressed in percentages by weight, defined by the following limits:
| | |
|---|---|
| SiO₂ | 69 to 75% |
| Al₂O₃ | 0 to 3% |
| B₂O₃ | 0 to 5% |
| CaO | 2 to 10% |
| MgO | 0 to 2% |
| Na₂O | 9 to 17% |
| K₂O | 0 to 8% |
and **in that** the following colouring agents consist of:
| | |
|---|---|
| Fe₂O₃ (total iron) | 0.2 to 4% |
| Se, CoO, Cr₂O₃, NiO, CuO | 0 to 0.45% |
the sum of the Se, CoO, Cr₂O₃, NiO and CuO contents being at least equal to 0.0002% when the Fe₂O₃ content is equal to or less than 1.5%, the sum of the Se, CoO, Cr₂O₃ and NiO contents varying from 0 to 0.15%,
this composition possibly comprising fluorine, oxides of zinc, zirconium, cerium and titanium and less than 4% barium oxide, the sum of the percentages of alkaline-earth oxides remaining equal to or less than 10% and the sum of the contents of the alkaline oxides being equal to or greater than approximately 15%.

2. Glass composition according to Claim 1, **characterised in that** the MgO content is less than 1% and is preferably practically zero.

3. Glass composition according to any one of the preceding claims, **characterised in that** it comprises 0.5 to 3.5% BaO by weight.

4. Glass composition according to any one of the preceding claims, **characterised in that** it comprises 0.5 to 2% fluorine by weight.

5. Glass composition according to any one of the preceding claims, **characterised in that** it comprises 0.05 to 3% ZnO by weight.

6. Glass composition according to any one of the preceding claims, **characterised in that** it comprises up to 1.5% ZrO₂ by weight.

7. Glass composition according to any one of the preceding claims, **characterised in that** it comprises up to 1.5% and preferably 0.3 to 0.8% Ce₂O₃ by weight.

8. Glass composition according to any one of the preceding claims, **characterised in that** it comprises up to 1% TiO₂ by weight.

9. Glass composition according to one of Claims 7 and 8, **characterised in that** it comprises simultaneously cerium and titanium oxides in proportions such that the sum Ce₂O₃ + TiO₂ remains equal to or less than 1.2%.

10. Glass composition according to any one of the preceding claims, **characterised in that** it comprises iron oxides in proportions such that the ratio FeO/Fe₂O₃ remains less than 0.8.

11. Glass composition according to any one of the preceding claims, **characterised in that** it comprises one or more colouring agents other than iron in proportions by weight defined by the following limits:
Se < 0.008%
CoO < 0.04%
Cr₂O₃ < 0.1%
NiO < 0.07%
CuO < 0.3%

12. Glass composition according to Claim 1, **characterised in that** it has a dominant wavelength under illuminant C of less than 560 nm.

13. Glazing pane, **characterised in that** it comprises at least one sheet of glass whose chemical composition is defined by any one of Claims 1 to 11, the said sheet having a thickness of between 0.8 and 10 mm.

## Patentansprüche (Patentansprüche für folgende(n) Vertragsstaat(en): BE, ES, LU, PT, SE)

1. Kalk-Natron-Silicat-Glaszusammensetzung, die in der Lage ist, insbesondere, um eine Glasscheibe zu bilden, gemäß dem Floatglasverfahren auf der Oberfläche eines Metallbads ausgebreitet zu werden, **dadurch gekennzeichnet, dass** sie folgende Bestandteile mit in Gewichtsprozent angegebenen Gehalten umfasst, die innerhalb nachstehender Grenzen festgelegt sind:
SiO₂ 69 bis 75 %
Al₂O₃ 0 bis 3 %
B₂O₃ 0 bis 5 %
CaO 2 bis 10 %
MgO 0 bis 2 %
Na₂O 9 bis 17 %
K₂O 0 bis 8 %,
und dass die Farbmittel aus
Fe₂O₃ (Gesamteisen) 0,2 bis 4 % und
Se, CoO, Cr₂O₃, NiO, CuO 0 bis 0,45 %
bestehen, die Summe der Gehalte an Se, CoO, Cr₂O₃, NiO und CuO mindestens 0,0002 % beträgt, wenn der Fe₂O₃-Gehalt gleich oder kleiner als 1,5 % ist, die Summe der Gehalte an Se, CoO, Cr₂O₃ und NiO von 0 bis 0,15 % variiert, diese Zusammensetzung gegebenenfalls Fluor, Zink-, Zirconium-, Cer- und Titanoxid und weniger als 4 % Bariumoxid enthält und die summe der Prozentanteile der Erdalkalimetalloxide gleich oder kleiner als 10 % bleibt.

2. Glaszusammensetzung nach Anspruch 1, **dadurch gekennzeichnet, dass** der MgO-Gehalt weniger als 1 % beträgt und vorzugsweise praktisch gleich Null ist.

3. Glaszusammensetzung nach Anspruch 1 oder 2, **dadurch gekennzeichnet, dass** die Summe der Alkalimetalloxidgehalte mehr als etwa 15 % beträgt.

4. Glaszusammensetzung nach einem der vorhergehenden Ansprüche, **dadurch gekennzeichnet, dass** sie 0,5 bis 3,5 Gew.-% BaO enthält.

5. Glaszusammensetzung nach einem der vorhergehenden Ansprüche, **dadurch gekennzeichnet, dass** sie 0,5 bis 2 Gew.-% Fluor enthält.

6. Glaszusammensetzung nach einem der vorhergehenden Ansprüche, **dadurch gekennzeichnet, dass** sie 0,05 bis 3 Gew.-% ZnO enthält.

7. Glaszusammensetzung nach einem der vorhergehenden Ansprüche, **dadurch gekennzeichnet, dass** sie bis zu 1,5 bis 3 Gew.-% ZrO₂ enthält.

8. Glaszusammensetzung nach einem der vorhergehenden Ansprüche, **dadurch gekennzeichnet, dass** sie bis zu 1,5 % und vorzugsweise 0,3 bis 0,8 Gew.-% Ce₂O₃ enthält.

9. Glaszusammensetzung nach einem der vorhergehenden Ansprüche, **dadurch gekennzeichnet, dass** sie bis zu 1 Gew.-% TiO₂ enthält.

10. Glaszusammensetzung nach Anspruch 8 oder 9, **dadurch gekennzeichnet, dass** sie gleichzeitig Ceroxid und Titanoxid mit derartigen Anteilen enthält, dass die Summe Ce₂O₃ + TiO₂ gleich oder kleiner als 1,2 % bleibt.

11. Glaszusammensetzung nach einem der vorhergehenden Ansprüche, **dadurch gekennzeichnet, dass** sie Eisenoxide mit derartigen Anteilen enthält, dass das Verhältnis von FeO/Fe₂O₃ kleiner als 0,8 bleibt.

12. Glaszusammensetzung nach einem der vorhergehenden Ansprüche, **dadurch gekennzeichnet, dass** sie ein oder mehrere Farbmittel, die kein Eisen sind, mit Gewichtsgehalten enthält, die innerhalb nachstehender Grenzen festgelegt sind:
Se < 0,008 %
CoO < 0,04 %
Cr₂O₃ < 0,1 %
NiO < 0,07 %
CuO < 0,3 %.

13. Glaszusammensetzung nach Anspruch 1, **dadurch gekennzeichnet, das**s sie für Normlichtart C eine dominierende Wellenlänge von kleiner als 560 nm aufweist.

14. Glas, **dadurch gekennzeichnet, dass** es mindestens eine Glasscheibe umfasst, deren chemische Zusammensetzung durch einen der Ansprüche 1 bis 12 definiert ist und welche eine Dicke von 0,8 bis 10 mm besitzt.

## Patentansprüche (Patentansprüche für folgende(n) Vertragsstaat(en): DE, FR, GB, IT)

1. Kalk-Natron-Silicat-Glaszusammensetzung, die in der Lage ist, insbesondere, um eine Glasscheibe zu bilden, gemäß dem Floatglasverfahren auf der Oberfläche eines Metallbads ausgebreitet zu werden, **dadurch gekennzeichnet, dass** sie folgende Bestandteile mit in Gewichtsprozent angegebenen Gehalten umfasst, die innerhalb nachstehender Grenzen festgelegt sind:
SiO₂ 69 bis 75 %
Al₂O₃ 0 bis 3 %
B₂O₃ 0 bis 5 %
CaO 2 bis 10 %
MgO 0 bis 2 %
Na₂O 9 bis 17 %
K₂O 0 bis 8 %,
**und dass** die Farbmittel aus
Fe₂O₃ (Gesamteisen) 0,2 bis 4 % und
Se, CoO, Cr₂O₃, NiO, CuO 0 bis 0,45 %
bestehen, die Summe der Gehalte an Se, CoO, Cr₂O₃, NiO und CuO mindestens 0,0002 % beträgt, wenn der Fe₂O₃-Gehalt gleich oder kleiner als 1,5 % ist, die Summe der Gehalte an Se, CoO, Cr₂O₃ und NiO von 0 bis 0,15 % variiert, diese Zusammensetzung gegebenenfalls Fluor, Zink-, Zirconium-, Cer- und Titanoxid und weniger als 4 % Bariumoxid enthält, die Summe der Prozentanteile der Erdalkalimetalloxide gleich oder kleiner als 10 % bleibt und die Summe der Gehalte der Alkalimetalloxide gleich oder größer als etwa 15 % ist.

2. Glaszusammensetzung nach Anspruch 1, **dadurch gekennzeichnet, dass** der MgO-Gehalt weniger als 1 % beträgt und vorzugsweise praktisch gleich Null ist.

3. Glaszusammensetzung nach einem der vorhergehenden Ansprüche, **dadurch gekennzeichnet, dass** sie 0,5 bis 3,5 Gew,-% BaO enthält.

4. Glaszusammensetzung nach einem der vorhergehenden Ansprüche, **dadurch gekennzeichnet, dass** sie 0,5 bis 2 Gew.-% Fluor enthält.

5. Glaszusammensetzung nach einem der vorhergehenden Ansprüche, **dadurch gekennzeichnet, dass** sie 0,05 bis 3 Gew.-% ZnO enthält.

6. Glaszusammensetzung nach einem der vorhergehenden Ansprüche, **dadurch gekennzeichnet, dass** sie bis zu 1,5 Gew.-% ZrO₂ enthält.

7. Glaszusammensetzung nach einem der vorhergehenden Ansprüche, **dadurch gekennzeichnet, dass** sie bis zu 1,5 Gew.-% und vorzugsweise 0,3 bis 0,8 Gew.-% Ce₂O₃ enthält.

8. Glaszusammensetzung nach einem der vorhergehenden Ansprüche, **dadurch gekennzeichnet, dass** sie bis zu 1 Gew.-% TiO₂ enthält.

9. Glaszusammensetzung nach Anspruch 7 oder 8, **dadurch gekennzeichnet, dass** sie gleichzeitig Ceroxid und Titanoxid mit derartigen Anteilen enthält, dass die Summe Ce₂O₃ + TiO₂ gleich oder kleiner als 1,2 % bleibt.

10. Glaszusammensetzung nach einem der vorhergehenden Ansprüche, **dadurch gekennzeichnet, dass** sie Eisenoxide mit derartigen Anteilen enthält, dass das Verhältnis von FeO/Fe₂O₃ kleiner als 0,8 bleibt.

11. Glaszusammensetzung nach einem der vorhergehenden Ansprüche, **dadurch gekennzeichnet, dass** sie ein oder mehrere Farbmittel, die kein Eisen sind, mit Gewichtsgehalten enthält, die innerhalb nachstehender Grenzen festgelegt sind:
Se < 0,008 %
CoO < 0,04 %
Cr₂O₃ < 0,1 %
NiO < 0,07 %
CuO < 0,3 %.

12. Glaszusammensetzung nach Anspruch 1, **dadurch gekennzeichnet, dass** sie für Normlichtart C eine dominierende Weilenlänge von kleiner als 560 nm aufweist.

13. Glas, **dadurch gekennzeichnet, dass** es mindestens eine Glasscheibe umfasst, deren chemische Zusammensetzung durch einen der Ansprüche 1 bis 11 definiert ist und welche eine Dicke von 0,8 bis 10 mm besitzt.
